(19) Europäisches Patentamt / European Patent Office / Office européen des brevets

(11) **EP 2 658 007 B1**

(12) **EUROPEAN PATENT SPECIFICATION**

(45) Date of publication and mention
of the grant of the patent:
**14.06.2017 Bulletin 2017/24**

(21) Application number: **11850821.7**

(22) Date of filing: **22.12.2011**

(51) Int Cl.:
*H01M 2/02* (2006.01)    *B29C 55/16* (2006.01)
*B32B 27/36* (2006.01)    *B29K 67/00* (2006.01)
*B29L 7/00* (2006.01)    *B29C 55/28* (2006.01)
*B32B 15/08* (2006.01)    *B32B 15/18* (2006.01)
*B32B 15/20* (2006.01)    *B32B 27/20* (2006.01)
*B32B 27/32* (2006.01)    *H01M 10/0525* (2010.01)

(86) International application number:
**PCT/JP2011/079770**

(87) International publication number:
**WO 2012/086741 (28.06.2012 Gazette 2012/26)**

(54) **BATTERY CASE PACKAGING MATERIAL FOR COLD MOLDING COMPRISING BIAXIALLY-STRETCHED POLYBUTYLENE TEREPHTHALATE FILM**

BATTERIEGEHÄUSEVERPACKUNGSMATERIAL FÜR EINE KALTE FORMMASSE MIT EINEM BIAXIAL GESTRECKTEN POLYBUTYLENTEREPHTHALATFILM

MATÉRIAU D'EMBALLAGE DE BOÎTIER DE BATTERIE DESTINÉ AU MOULAGE À FROID, QUI COMPREND UNE COUCHE DE POLY TÉRÉPHTALATE DE BUTYLÈNE ÉTIRÉE DE FAÇON BIAXIALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2010 JP 2010287383**
**06.12.2011 JP 2011266421**

(43) Date of publication of application:
**30.10.2013 Bulletin 2013/44**

(73) Proprietor: **KOHJIN Film & Chemicals Co., Ltd.**
**Tokyo 105-0011 (JP)**

(72) Inventors:
• **NAGAE Shuichi**
**Yatsushiro-shi**
**Kumamoto 866-8686 (JP)**
• **HAMADA Kazuhiro**
**Yatsushiro-shi**
**Kumamoto 866-8686 (JP)**

• **HONDA Tubasa**
**Yatsushiro-shi**
**Kumamoto 866-8686 (JP)**
• **MURAKAMI Takenori**
**Yatsushiro-shi**
**Kumamoto 866-8686 (JP)**

(74) Representative: **Müller-Boré & Partner**
**Patentanwälte PartG mbB**
**Friedenheimer Brücke 21**
**80639 München (DE)**

(56) References cited:
EP-A1- 1 102 336       EP-A1- 1 640 152
JP-A- 5 261 809       JP-A- 5 261 809
JP-A- 10 012 200       JP-A- 10 012 200
JP-A- 2000 123 800       JP-A- 2001 176 463
JP-A- 2001 176 463       JP-A- 2002 187 233
JP-A- 2010 277 693       JP-A- 2010 277 693

## Description

### FIELD OF THE INVENTION

The present invention relates to a packaging material for cold forming comprising a biaxially-stretched polybutylene terephthalate film having excellent moisture-proof properties, acid resistance, and cold-formability. In particular, the present invention relates to a packaging material for a battery such as a lithium ion secondary battery.

### BACKGROUND OF THE INVENTION

Conventionally, various kinds of batteries are widely used in personal computers, portable terminal devices (such as mobile phones and PDAs), video cameras, electric automobiles, energy storage rechargeable batteries, robots, and satellites, for example. These batteries contain elements converting chemical energy into electrical energy, the chemical energy being derived from, for example, lithium ion batteries, lithium ion polymer batteries, fuel cells, or electrolytic capacitors such as liquid capacitors, solid capacitors, or double-layer capacitors containing a dielectric substance such as a liquid, a solid ceramic, or an organic material. Outer packaging materials for such batteries have included a metallic can type (in which metal is pressed to make a cylindrical or rectangular parallelepiped-shaped container) or a laminate type (which is obtained by laminating plastic film, metal foil, or the like).

However, in the metallic can-type outer packaging material for batteries, exterior container walls are rigid. Designs must therefore match hard sides to a shape of the battery and a degree of freedom for the shape is limited. In addition, containers of the metallic can type are thick, and thus when the battery heats up during extended use, for example, heat is unlikely to dissipate. Meanwhile, in the laminate type, metal terminals are readily pulled out and sealed. In addition, the laminate type is flexible. Therefore, the laminate type can be given a shape suited to a modest space in electronic devices and components. The shapes of the electronic devices and components can thus be designed with a certain degree of freedom. Moreover, thin films have excellent heat-releasing properties, and thus the laminate type can prevent anomalous discharges due to heat. Thus, the laminate type is readily made more compact and lighter as compared to the metallic can type, and the laminate type offers a higher degree of safety. Therefore, the laminate type is becoming predominant in outer packaging material for batteries.

As a lithium battery using a laminate-type outer packaging material, a bag type is known in which packaging material is processed into a tubular shape; a lithium battery main body and metal terminals are housed in a state protruding to an exterior, the metal terminals connected to each of a positive electrode and a negative electrode; and an opening is heat-sealed (see, e.g., Fig. 2 of Patent Literature 1). A formed type is also known in which packaging material is formed into a container shape; a lithium battery main body and metal terminals are housed within the container in a state where the metal terminals connected to each of a positive electrode and a negative electrode protrude to an exterior; the lithium battery main body and metal terminals are covered by a flat plate-shaped packaging material or the packaging material formed into the container shape; and four peripheral edges are heat-sealed (see, e.g., Fig. 3 of Patent Literature 1).

As compared to the bag type, the formed type can snugly (in a tightly-fitted state) house the battery main body, and thus volumetric energy density can be improved. In addition, the lithium battery main body is easily housed. Moreover, a cold (ambient temperature) forming method for the formed type has a low risk that inherent properties of the packaging material will change during forming as in a hot forming method, such as a reduction in strength properties or an occurrence of heat shrinkage due to heating. In addition, forming equipment for the cold forming method is cheaper and easier to use and production is higher than in the hot forming method. Therefore, the cold forming method is currently the predominant forming method.

Properties and features required for the outer packaging material for a battery include a high level of moisture-proofing, acid resistance (resistance to hydrofluoric acid, which is produced by electrolyte depletion or hydrolysis), cold-formability, sealing ability, puncture resistance, pinhole resistance, insulation properties, heat resistance, and cold resistance, which are essential. Moisture-proofing, acid resistance, and cold-formability are particularly important elements.

In the laminate-type outer packaging material for batteries, a laminate structure of the cold forming type generally includes, beginning from an outer side, a base layer, a barrier layer, and a sealant layer or, alternatively, a base layer, a barrier layer, a barrier material reinforcing layer, and a sealant layer. However, aluminum foil (used primarily for the barrier layer) readily develops pinholes and cracks due to uneven deformation during forming. In order to compensate for this, methods in which a base material having excellent mechanical strength is laminated as the base layer and/or the barrier material reinforcing layer have been suggested in Patent Literatures 2, 3, 4, 5, and 6. Examples of the base material may include a biaxially-stretched nylon 6 (hereafter, Ny) film, a biaxially-stretched polyethylene terephthalate (hereafter, PET) film, a biaxially-stretched polypropylene (hereafter, PP) film, and an unstretched or stretched polybutylene terephthalate (hereafter, PBT) film. In addition, in order to impart the important required properties other than cold-formability (i.e., moisture-proofing and acid resistance), a method has been suggested using a polyester film (such as a PET film or PBT film) or a polyolefin film (such as a PP film) as the base layer and/or the barrier material reinforcing layer.

**RELATED ART**

**Patent Literature**

Patent Literature 1: Japanese Patent Laid-Open Publication No. 2004-74419
Patent Literature 2: Japanese Patent Laid-Open Publication No. 2000-123800
Patent Literature 3: Japanese Patent Laid-Open Publication No. 2004-327044
Patent Literature 4: Japanese Patent Laid-Open Publication No. 2001-30407
Patent Literature 5: Japanese Patent Laid-Open Publication No. 2007-294380
Patent Literature 6: Japanese Patent Laid-Open Publication No. 2008-4506

**SUMMARY OF THE INVENTION**

**Problem to Be Solved by the Invention**

However, methods proposed in Patent Literatures 2 and 3 use only the biaxially-stretched Ny film, which has low anisotropy and high tensile strength, as the base layer and/or the barrier material reinforcing layer. Although these methods have excellent cold-formability, the film is hygroscopic. Therefore, when the contents are electrolytes extremely phobic to infiltration of moisture from an exterior, for example, moisture-proofing becomes an issue. In addition, the biaxially-stretched Ny film has low acid resistance, and thus resistance to hydrofluoric acid produced by electrolyte depletion or hydrolysis is also problematic. Further, a method proposed in Patent Literature 3 using a biaxially-stretched PET film or a biaxially-stretched PP film as the base layer and/or the barrier material reinforcing layer has excellent moisture-proofing and acid resistance. However, in consideration of resin properties and methods of manufacture, cold-formability is inferior to that of the biaxially-stretched Ny film. Moreover, methods proposed in Patent Literatures 4, 5, and 6 use an unstretched or stretched PBT film as the base layer and/or the barrier material reinforcing layer. No specific description is given regarding characteristics or film properties of the PBT film used, nor regarding the manufacturing method. Moreover, in the stretched PBT films, uniaxially-stretched films had insufficient mechanical strength and remarkably high anisotropy. Therefore, adequate cold-formability could not be obtained.

**Solution to the Problem**

The inventors of the present invention have arrived at the present invention by discovering that excellent cold-formability can be ensured without sacrificing acid resistance and moisture-proofing in a battery case packaging material for cold forming in which a base layer, a barrier layer, and a sealant layer or alternatively a base layer, a barrier layer, a barrier material reinforcing layer, and a sealant layer are laminated in order from an outer side by utilizing a biaxially-stretched PBT film as the base layer and/or the barrier material reinforcing layer.

Specifically, the present invention provides the following items and means.

[1] A battery case packaging material for cold forming having a base layer, a barrier layer, and a sealant layer or alternatively a base layer, a barrier layer, a barrier material reinforcing layer, and a sealant layer laminated in order from an outer side, wherein the battery case packaging material utilizes a biaxially-stretched polybutylene terephthalate film having a 50% modulus value in all four directions (0° (MD), 45°, 90° (TD), 135°) of 100 MPa or more as the base layer and/or the barrier material reinforcing layer.

[2] The battery case packaging material for cold forming according to [1] above, in which the base layer and/or the barrier material reinforcing layer are configured with a plurality of films including the biaxially-stretched polybutylene terephthalate film.

[3] The battery case packaging material for cold forming according to [1] or [2] above, in which a tensile fracture strength in all four directions (0° (MD), 45°, 90° (TD), 135°) of the biaxially-stretched polybutylene terephthalate film is 200 MPa or more.

[4] The battery case packaging material for cold forming according to one of [1] to [3] above, in which the biaxially-stretched polybutylene terephthalate film has a ratio between a maximum value and a minimum value of the tensile fracture strength in the four directions (0° (MD), 45°, 90° (TD), 135°) of 1.5 or less.

**Effect of the Invention**

The present invention can inhibit fractures or pinholes from developing in aluminum foil during cold forming for any shape or forming depth and ensure stable formability without sacrificing acid resistance and moisture-proofing in a battery case packaging material for cold forming in which a base layer, a barrier layer, and a sealant layer or alternatively a base layer, a barrier layer, a barrier material reinforcing layer, and a sealant layer are laminated in order from an outer side by utilizing a biaxially-stretched PBT film as the base layer and/or the barrier material reinforcing layer.

**BRIEF DESCRIPTION OF THE DRAWINGS**

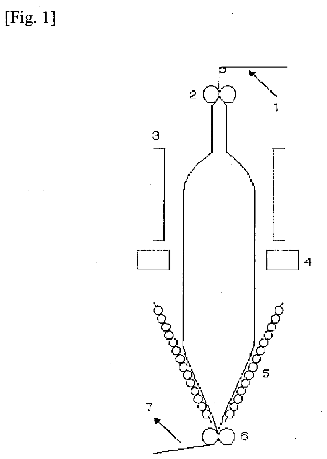

[Fig. 1] is a schematic view of a tubular simultaneous biaxial stretching device.

**MODE FOR CARRYING OUT THE INVENTION**

An optimal mode for carrying out the present invention is described hereafter.

(Raw Material for Biaxially-Stretched PBT Film) A raw material used in the biaxially-stretched PBT film is not particularly limited so long as the raw material is a polyester with butylene terephthalate as the main repeating unit. Specifically, the raw material is a homopolymer- or copolymer-type polyester obtained by condensing main components, including 1,4-butanediol (or an ester-forming derivative thereof) as a glycol component and terephthalic acid (or an ester-forming derivative thereof) as a dibasic acid component. In order to impart an optimal mechanical strength characteristic, polybutylene terephthalate resins having a melting point of 200 to 250°C and an intrinsic viscosity (IV) value in a range of 1.10 to 1.35 dl/g are preferred, while those having a melting point of 215 to 225°C and an IV value in a range of 1.15 to 1.30 dl/g are particularly preferred.

Herein, a copolyester having polybutylene terephthalate as the main component is a polyester in which a substance having a portion of a terephthalic acid component (used as the dibasic acid component) substituted with a different dibasic acid component (such as isophthalic acid, phthalic acid, adipic acid, or sebacic acid) and/or a substance having a portion of a 1,4-butanediol component (used as the glycol component) substituted with a different glycol component (such as ethylene glycol, diethylene glycol, propylene glycol, neopentyl glycol, or cyclohexane methanol) are condensed. A substance having a butylene terephthalate unit of 70% or more is preferred.

Moreover, within a range not detrimental to physical properties, a different kind of polyester (such as polyethylene terephthalate, polyethylene naphthalate, polyhexamethylene terephthalate, or poly(ethylene terephthalate/ethylene isophthalate)), a polycarbonate, a polyamide, or the like may be blended or laminated with the polybutylene terephthalate of the present invention and worked by stretching. Furthermore, as needed, additives may be included such as a lubricant, antiblocking agent, inorganic filler, antioxidant, ultraviolet absorbing agent, antistatic agent, flame retardant, plasticizer, colorant, crystallization inhibitor, or crystallization promoter. In addition, PBT resin pellets are preferably used after performing adequate preliminary drying such that moisture content prior to heating and melting is 0.05 wt% or less, and more preferably 0.02 wt% or less, in order to avoid a reduction in viscosity due to hydrolysis during heating and melting.

(Method of Manufacturing PBT Unstretched Original Sheet) In order to biaxially stretch the PBT resin in a stable way, crystallization of the unstretched original sheet prior to stretching must be strictly inhibited. When an extruded PBT melt is cooled to form a film, a crystallization temperature region of the polymer is cooled at a certain speed or greater. In other words, the speed at which the original sheet is cooled is an important factor. The speed at which the original sheet is cooled is 200°C/sec or more, preferably 250°C/sec or more, and 350°C/sec or more is particularly preferred. The unstretched original sheet formed into a film at a high cooling speed preserves an extremely low crystallization state, and thus stability of bubbles during stretching is dramatically increased. Moreover, high-speed film formation becomes possible, and thus productivity is also improved. At a cooling speed of less than 200°C/sec, not only is crystallization of the resulting unstretched original sheet higher and the material's ability to be stretched reduced, but in an extreme case stretched bubbles may rupture and stretching may not be continuous. A method for producing a film from the original sheet is not particularly limited so long as the method meets the above-described speed at which the original sheet is cooled. However, in flash-cooling film formation, a direct internal/external water-cooling method is most appropriate. A summary is now given of a method for producing a film from the original sheet using the direct internal/external water-cooling method. First, a PBT resin is melted and kneaded by an extruder set to a temperature of 210 to 270°C. When forming the film with a T-die, the sheet-shaped melted resin is dipped in a water bath and is thus directly cooled internally and externally. Meanwhile, when forming an annular film, a melted tubular thin film is formed by being extruded downward from a downward-facing annular die attached to the extruder. Next, the melted tubular thin film is guided to a cooling mandrel linked to the annular die and cooling water introduced from each nozzle of the cooling mandrel directly contacts and cools an interior of the melted tubular thin film. Simultaneously, cooling water also flows from an exterior cooling bath used in combination with the cooling mandrel. The cooling water then makes contact with and cools an exterior of the melted tubular thin film. Internal water and external water preferably have a temperature of 30°C or less, and a temperature of 20°C or less is particularly preferred in flash-cooling film formation. A temperature greater than 30°C may lead to defects in external appearance of the original sheet due to the original sheet blanching or due to the cooling water boiling. Stretching then becomes increasingly difficult.

(Method for Producing Biaxially-Stretched PBT Film) The unstretched PBT original sheet must be conveyed to a stretching zone while being kept at an ambient temperature of 25°C or less and preferably at 20°C or less. Thus, the crystallization of the unstretched original sheet immediately after formation as a film can be maintained regardless of the amount of time kept under temperature control. This control of crystallization until stretching begins may be said to be a technique for forming a film from the unstretched original sheet, and is also an important point in stably performing biaxial stretching of the PBT resin. The biaxial stretching method is not particularly limited and may be selected as appropriate from, for example, a method in which stretching is performed simultaneously in length and width directions or a method performing sequential biaxial stretching, with either a tubular system or a tenter system. From the perspective of balancing physical properties in a circumferential direction of the biaxially-stretched PBT film, a simultaneous biaxial stretching method using the tubular method is particularly preferred. Fig. 1 is a schematic view of a tubular method simultaneous biaxial stretching device. An unstretched original sheet 1 guided into a stretching zone is fed between a pair of low-speed nip rolls 2, then is heated by a stretching heater 3 while air is injected inside. In addition, when stretching ends, air is blown onto the original sheet 1 by a cooling shoulder air ring 4. A biaxially-stretched film 7 simultaneously stretched in MD and TD with the tubular method is thus obtained. The draw ratio is preferably in a range of 2.7 to 4.0 times in each of the MD and the TD in view of stretching stability and strength properties, transparency, and thickness uniformity of the resulting biaxially-stretched PBT film. When the draw ratio is less than 2.7 times, tensile strength and impact strength of the resulting biaxially-stretched PBT film is insufficient and therefore is not preferred. Meanwhile, when the draw ratio is greater than 4.0 times, molecular chains develop excessive strain due to the stretching. Thus, fractures and punctures frequently develop during stretching work and the biaxially-stretched PBT film cannot be produced in a stable way. The stretching temperature is preferably in a range of 40 to 80°C, and 45 to 65°C is particularly preferred. The unstretched original sheet produced with the above-described high cooling speed has low crystallization, and therefore can be stretched in a stable way at a stretching temperature in a comparatively low range. When stretching at a high temperature greater than 80°C, instability of the stretched bubbles becomes pronounced and a marked stretching surface irregularity develops. A film having favorable thickness accuracy thus cannot be obtained. Meanwhile, when stretching at a temperature less than 40°C, excessive stretching-orientation crystallization develops due to low temperature stretching, leading to blanching of the film and the like, and occasionally the stretched bubbles rupture and continuous stretching becomes difficult. When biaxial stretching is performed in this way, strength properties in particular are dramatically improved and a biaxially-stretched PBT film with low anisotropy can be obtained.

By loading the resulting biaxially-stretched PBT film into heat treating equipment using a hot rolling system, the tenter system, or a combination of both for a desired amount of time and performing heat treatment at 180 to 240°C (190 to 210°C being particularly preferred), a biaxially-stretched PBT film having excellent thermal dimensional stability can be obtained. When a heat treatment temperature is higher than 220°C, a Boeing phenomenon becomes too greatly pronounced and anisotropy in the width direction increases or a degree of crystallization becomes too high, and thus strength properties decrease. Meanwhile, when the heat treatment temperature is lower than 185°C, thermal dimensional stability of the film is greatly reduced and thus the film becomes likely to shrink during lamination or printing, leading to problems of practicality.

The thickness of the biaxially-stretched PBT film is 5 to 50 $\mu$m, and more preferably 10 to 30 $\mu$m. When the thickness is less than 5 $\mu$m, impact resistance of the laminate packaging material is reduced and cold-formability is insufficient. Meanwhile, when the thickness is more than 50 $\mu$m, strength to maintain a shape is improved; however, a positive effect on fracture prevention and improvement in formability in particular is slight and volumetric energy density is merely reduced.

The tensile fracture strength in four directions (0° (MD), 45°, 90° (TD), 135°) of the biaxially-stretched PBT film is preferably 200 MPa or more in every direction and a 50% modulus value is preferably 100 MPa or more. In order to reduce anisotropy, a ratio between a maximum value and a minimum value of the tensile fracture strength in the four directions (0° (MD), 45°, 90° (TD), 135°) is preferably adjusted to 1.5 or less and a ratio of 1.3 or less is particularly preferred. Thereby, regardless of the shape or forming depth, aluminum foil is unlikely to fracture during cold forming and stable formability can be ensured. When the tensile fracture strength is less than 200 MPa and the 50% modulus value is less than 100 MPa in any one direction, or when the ratio between the maximum value and the minimum value of the tensile fracture strength in four directions is greater than 1.5, the aluminum foil or the biaxially-stretched PBT film itself becomes readily fractured during cold forming and stable formability cannot be obtained.

(Configuration of Battery Case Packaging Material for Cold Forming) A battery case packaging material for cold forming is configured by laminating one layer or two or more layers of another base material on one or both surfaces of the biaxially-stretched PBT film. Specifically, beginning from an outer side, a three-layered configuration of a base layer, a barrier layer, and a sealant layer or a four-layered configuration of a base layer, a barrier layer, a barrier material reinforcing layer, and a sealant layer is given. Then, the base layer and/or the barrier material reinforcing layer can be configured with the biaxially-stretched PBT film alone, or with a combination of the biaxially-stretched PBT film and another base material such as a biaxially-stretched Ny film, a biaxially-stretched PET film, or a biaxially-stretched PP film. Pure aluminum foil for imparting high moisture-proofing may be used as the barrier layer, or an aluminum-iron alloy flexible material, a stainless steel foil, and an iron foil. In order to impart sealability and chemical resistance, an unstretched polyethylene film, an unstretched polypropylene film, an unstretched polyvinyl chloride film, an ethylene-vinyl acetate film, an ionomer film, or a different ethylene copolymer film may be used as the sealant layer. In general, a laminate packaging material including an aluminum foil layer readily develops fractures and pinholes in the aluminum foil layer during cold forming and thus does not necessarily have adequate cold formability. However, the battery case packaging material for cold forming of the present invention which includes the biaxially-stretched PBT film has excellent formability, impact resistance, and pinhole resistance. Therefore, when stretch-expanding or deep-drawing in cold forming, fracturing of the aluminum foil layer can be inhibited. Moreover, the biaxially-stretched PBT film has excellent acid resistance and moisture-proofing as well and therefore can be particularly effective for electrolytes, which are extremely phobic to infiltration of moisture from an exterior.

The total thickness of the battery case packaging material for cold forming including the biaxially-stretched PBT film is preferably 200 $\mu$m or less. When the thickness is greater than 200 $\mu$m, forming of a corner portion in cold forming is difficult and a formed article having a sharp shape may not be obtained.

The thickness of the aluminum foil layer configuring the barrier layer is preferably 20 to 100 $\mu$m. Thereby, the shape of the formed article can be favorably retained and infiltration of oxygen or moisture into the packaging material can be prevented. When the thickness of the aluminum foil layer is less than 20 $\mu$m, the aluminum foil layer is likely to develop fractures during cold forming of the laminate packaging material. Even when fracturing does not occur, pinholes or the like readily occur, and thus oxygen or moisture may infiltrate into the packaging material. Meanwhile, when the thickness of the aluminum foil layer is greater than 100 $\mu$m, a positive effect of preventing the development of fractures or pinholes during cold forming is not especially improved. Instead, total thickness merely increases. A thickness greater than 100 $\mu$m for the aluminum foil layer is therefore not preferred.

**Embodiment**

Hereafter, the present invention is specifically described with reference to embodiments and comparative examples.

<Embodiment 1> (Method for Producing Biaxially-Stretched PBT Film)

PBT resin pellets (homo-type, melting point = 224°C, IV value = 1.26 dl/g) that were dried in a hot-air dryer for five hours at 140°C were melted and kneaded in an extruder at temperature conditions of 210 to 260°C for each of a cylinder and a die to extrude a melted tubular thin film downward from an annular die. Next, after passing over an exterior diameter of a cooling mandrel and being folded by a collapser roll, a drawing nip roll performed drawing for film formation at a speed of 1.2 m/min. A temperature of cooling water directly contacting the melted tubular thin film was 20°C on both interior and exterior, and a rate of cooling for the original sheet was 416°C/sec. The thickness of the unstretched original sheet was 130 $\mu$m and a lay-flat width was 143 mm. Magnesium stearate was added to the PBT resin at 1000 ppm ahead of time as a lubricant. The unstretched original sheet 1 formed into a film under the above-described conditions was conveyed to the low-speed nip roll 2 in an atmosphere of 20°C, then simultaneous lateral and vertical biaxial stretching was performed by a tubular simultaneous biaxial stretching device having a configuration shown in Fig. 1. The draw ratio was 3.0 times in MD and 2.8 times in TD, and the stretching temperature was 60°C. Next, the biaxially-stretched film 7 was loaded into heat treating equipment for each of the hot rolling system and the tenter system, then by conducting the heat treatment at 210°C, the biaxially-stretched PBT film of the present invention was obtained. Moreover, thickness of the biaxially-stretched PBT film was 15 $\mu$m.

(Method for Measuring Cooling Speed of Original Sheet) The cooling speed of the original sheet was calculated with the following formula. The temperatures of the melted thin film and the original sheet were measured by a contact-type radiation thermometer. In addition, the starting point for cooling is a portion where the melted thin film contacts the cooling water or a cooling device. The end point for the cooling is a portion where the temperature of the unstretched original sheet reaches 30°C.

$$\text{Cooling speed of original sheet (°C/sec)} = \text{(melted thin film temperature immediately}$$
$$\text{before starting point of cooling} - \text{original sheet temperature at end point of cooling) (°C)}$$
$$/ \text{(distance between starting point and end point of cooling) (m)} \times \text{original sheet transit}$$
$$\text{speed between starting point and end point of cooling (m/sec)}$$

(Method for Evaluating Tensile Fracture Elongation Strength for Biaxially-Stretched PBT Film) Tensile fracture elongation strength for the biaxially-stretched PBT film was found using an Orientec Tensiron (RTC-1210-A) to perform measurements of the four directions (0° (MD) direction, 45° direction, 90° (TD) direction, 135° direction) under conditions where a sample width was 15 mm, a chuck interval was 100 mm, and a tensile speed was 200 mm/min. Ratios of maximum and minimum values for tensile fracture strength in each direction, 50% modulus value, and tensile fracture strength for four directions were obtained based on a resulting stress-strain curve and are shown in Table 1.

(Method for Evaluating Cold-Formability) Cold-formability for the laminate packaging material including the biaxially-stretched PBT film was evaluated. Specifically, the resulting biaxially-stretched PBT film was placed on an exterior side of the aluminum foil (AA8079-0, 30 $\mu$m thick) and an unstretched polypropylene film (pylen film CT-P1128 (product name) made by Toyobo Co., Ltd., 30 $\mu$m thick) was placed on an interior side. By dry laminating each (dry coating amount 4.0 g/m$^2$), the laminate packaging material was obtained. Moreover, Toyo-Morton Ltd. TM-K55/Toyo-Morton Ltd. CAT-10 (mix ratio 100/8) were used as an adhesive agent for dry laminating. In addition, after dry laminating, the laminate packaging material was aged at 60°C for 72 hours. The laminate packaging material obtained in this way underwent humidity conditioning for two hours in an environment of 50% humidity at 23°C, after which a maximum forming depth for the laminate packaging material at which no flaws (such as pinholes or cracks) developed was evaluated at a pitch of 0.5 mm by using a compression die (38 mm by 38 mm) to cold- (ambient temperature) form the laminate packaging material on the unstretched polypropylene film side at a maximum load of 10 MPa.

(Method for Evaluating Acid Resistance)

One drop each of concentrated hydrochloric acid and concentrated hydrofluoric acid were dripped onto a front surface of the base layer of the resulting laminate packaging material, then were left to stand at room temperature for one hour. After being left to stand, the dripped acid was removed and the film was visually checked for blanching and dissolving.

(Method for Evaluating Moisture-Proofing)

In a method for evaluating moisture-proofing of the resulting biaxially-stretched PBT film, water vapor permeability (moisture transmission) was measured in compliance with JISZ0208 in an environment of 40°C and 90% RH. When water vapor permeability was less than 50 g/m$^2$ per 24 hours, a rating of ⊚ was given. When water vapor permeability was 50 up to 100 g/m$^2$ per 24 hours or less, a rating of ○ was given. When water vapor permeability was greater than 100 g/m$^2$ per 24 hours, a rating of × was given.

<Embodiments 2 to 3, Comparative Examples 1 to 2> Performed similarly to Embodiment 1, except that the draw ratio of Embodiment 1 was changed to those conditions noted in Table 1.

<Embodiments 4 to 8, Comparative Examples 3 to 7> Performed similarly to Embodiment 1, except that the base layer and/or the barrier material reinforcing layer of Embodiment 1 were changed to the biaxially-stretched films noted in Table 1. Moreover, the biaxially-stretched Ny film was BN-RX (manufactured by Kohjin Co., 15 $\mu$m thick), the biaxially-stretched PET film was FE2001 (manufactured by Futamura Chemical Co., 25 $\mu$m thick), and the biaxially-stretched PP film was MF20 (manufactured by SunTox Co., 25 $\mu$m thick).

<Embodiments 9 to 10> Performed similarly to Embodiment 1, except that the method for stretching the biaxially-stretched PBT film in Embodiment 1 was changed to the methods noted in Table 1.

As shown in Table 2, excellent cold-formability can be ensured without sacrificing acid resistance and moisture-proofing in a battery case packaging material for cold forming in which a base layer, a barrier layer, and a sealant layer or alternatively a base layer, a barrier layer, a barrier material reinforcing layer, and a sealant layer are laminated in order from an outer side by utilizing a biaxially-stretched PBT film as the base layer and/or the barrier material reinforcing layer. Moreover, Embodiments 1 to 3, which used biaxially-stretched PBT films adjusted to have a tensile fracture strength of 200 MPa or more and a 50% modulus value of 100 MPa or more, and Embodiments 9 and 10 were able to ensure excellent cold-formability while maintaining acid resistance and moisture-proofing for the biaxially-stretched PBT film. Meanwhile, formability decreased in Comparative Examples 1 and 2, which used biaxially-stretched PBT films having a tensile strength of less than 200 MPa and a 50% modulus value of less than 100 MPa as the base layer and/or the barrier material reinforcing layer. Formability was favorable in Comparative Examples 3, 6, and 7, which used biaxially-stretched Ny films in a portion thereof, but acid resistance and moisture-proofing decreased. Furthermore, in Comparative Examples 4 and 5, which used biaxially-stretched PET films, the film had a high tensile fracture strength and 50% modulus value, but was unable to achieve cold-formability at the level of the biaxially-stretched PBT film.

Moreover, a numerical value for the maximum forming height, which is an indicator of cold-formability, differs according to conditions such as shape of the die. However, when measured after forming under the same conditions, differences emerged in actual usefulness even for differences of 0.5 mm.

[Table 1]

| Index | Laminate structure | | | | Stretching conditions of biaxially-stretched PBT film | | |
|---|---|---|---|---|---|---|---|
| | Base layer | Barrier layer | Barrier material reinforcing layer | Sealant layer | Stretching method | Draw ratio | |
| | | | | | | MD | TD |
| Emb. 1 | PBT | AL | -- | CPP | Tubular simultaneous biaxial stretching | 3.0 | 2.8 |
| Emb. 2 | PBT | AL | -- | CPP | Tubular simultaneous biaxial stretching | 3.5 | 3.5 |
| Emb. 3 | PBT | AL | -- | CPP | Tubular simultaneous biaxial stretching | 4.0 | 3.8 |
| Emb. 4 | PBT | AL | PBT | CPP | Tubular simultaneous biaxial stretching | 3.5 | 3.5 |
| Emb. 5 | PBT | AL | OPP | CPP | Tubular simultaneous biaxial stretching | 3.5 | 3.5 |
| Emb. 6 | PBT/Ny | AL | -- | CPP | Tubular simultaneous biaxial stretching | 3.5 | 3.5 |
| Emb. 7 | PBT | AL | Ny | CPP | Tubular simultaneous biaxial stretching | 3.5 | 3.5 |
| Emb. 8 | PBT | AL | Ny/PBT | CPP | Tubular simultaneous biaxial stretching | 3.5 | 3.5 |
| Emb. 9 | PBT | AL | -- | CPP | Tenter simultaneous biaxial stretching | 3.5 | 3.5 |
| Emb. 10 | PBT | AL | -- | CPP | Tenter sequential biaxial stretching | 3.0 | 4.0 |
| C.E. 1 | PBT | AL | -- | CPP | Tubular simultaneous biaxial stretching | 2.8 | 2.5 |
| C.E. 2 | PBT | AL | -- | CPP | Tubular simultaneous biaxial stretching | 3.0 | 2.5 |
| C.E. 3 | Ny | AL | -- | CPP | -- | -- | -- |
| C.E. 4 | PET | AL | -- | CPP | -- | -- | -- |
| C.E. 5 | PET/Ny | AL | -- | CPP | -- | -- | -- |
| C.E. 6 | Ny | AL | Ny | CPP | -- | -- | -- |
| C.E. 7 | Ny | AL | OPP | CPP | -- | -- | -- |

[Table 2]

| Index | of biaxially-stretched PBT film | | | | | of biaxially-stretched PBT film | | | | Acid resistance | | Moisture-proofing | Formability (max. forming height) |
|---|---|---|---|---|---|---|---|---|---|---|---|---|---|
| | MD (0°) | 45° | TD (90°) | 135° | Max. value/ min. value | MD (0°) | 45° | TD (90°) | 135° | HCl | HF | | |
| | MPa | | | | | MPa | | | | | | | mm |
| Emb. 1 | 210 | 252 | 260 | 203 | 1.28 | 105 | 123 | 156 | 106 | No change | No change | ◎ | 4.5 |
| Emb. 2 | 210 | 233 | 265 | 215 | 1.26 | 111 | 144 | 172 | 122 | No change | No change | ◎ | 5.0 |
| Emb. 3 | 220 | 228 | 270 | 211 | 1.28 | 113 | 145 | 191 | 132 | No change | No change | ◎ | 5.0 |
| Emb. 4 | 210 | 233 | 265 | 215 | 1.26 | 111 | 144 | 172 | 122 | No change | No change | ◎ | 7.0 |
| Emb. 5 | 210 | 233 | 265 | 215 | 1.26 | 111 | 144 | 172 | 122 | No change | No change | ◎ | 6.5 |
| Emb. 6 | 210 | 233 | 265 | 215 | 1.26 | 111 | 144 | 172 | 122 | No change | No change | ○ | 5.5 |
| Emb. 7 | 210 | 233 | 265 | 215 | 1.26 | 111 | 144 | 172 | 122 | No change | No change | ○ | 7.0 |
| Emb. 8 | 210 | 233 | 265 | 215 | 1.27 | 111 | 144 | 172 | 122 | No change | No change | ○ | 10.0 |
| Emb. 9 | 205 | 283 | 208 | 236 | 1.38 | 101 | 180 | 105 | 145 | No change | No change | ◎ | 4.5 |
| Emb. 10 | 201 | 201 | 291 | 228 | 1.45 | 101 | 104 | 190 | 154 | No change | No change | ◎ | 4.5 |
| C.E. 1 | 189 | 196 | 207 | 168 | 1.23 | 85 | 90 | 141 | 86 | No change | No change | ◎ | 4.0 |
| C.E. 2 | 163 | 207 | 182 | 193 | 1.27 | 87 | 111 | 138 | 96 | No change | No change | ◎ | 4.0 |
| C.E. 3 | -- | -- | -- | -- | -- | -- | -- | -- | -- | Dissolved | Blanching | × | 5.0 |
| C.E. 4 | -- | -- | -- | -- | -- | -- | -- | -- | -- | No change | No change | ◎ | 4.0 |
| C.E. 5 | -- | -- | -- | -- | -- | -- | -- | -- | -- | No change | No change | ○ | 4.5 |
| C.E. 6 | -- | -- | -- | -- | -- | -- | -- | -- | -- | Dissolved | Blanching | × | 7.0 |

(continued)

| Index | of biaxially-stretched PBT film | | | | Max. value/ min. value | of biaxially-stretched PBT film | | | | Acid resistance | | Moisture-proofing | Formability (max. forming height) |
|---|---|---|---|---|---|---|---|---|---|---|---|---|---|
| | MD (0°) | 45° | TD (90°) | 135° | | MD (0°) | 45° | TD (90°) | 135° | HCl | HF | | |
| | MPa | | | | | MPa | | | | Dissolved | Blanching | | mm |
| C.E. 7 | -- | -- | -- | -- | -- | -- | -- | -- | -- | Dissolved | Blanching | × | 6.5 |

## INDUSTRIAL APPLICABILITY

A biaxially-stretched PBT film according to the present invention is a base material excellent for cold (ambient temperature) forming, such as stretch-expand forming or deep-drawing forming. Anisotropy is low and mechanical strength characteristics, such as tensile strength, are excellent. Therefore, a battery case packaging material for cold forming that includes the biaxially-stretched PBT film of the present invention is capable of sharp forming and can also prevent the occurrence of fractures and pinholes in aluminum foil during forming.

Fields and applications using the battery case packaging material for cold forming that includes the biaxially-stretched PBT film of the present invention include, most appropriately, a battery case packaging material for a lithium ion secondary battery, which requires excellent formability. However, even among other primary and secondary batteries which must be lighter and more compact, the battery case packaging material for cold forming that includes the biaxially-stretched PBT film of the present invention can be employed in cases requiring that a battery case have a low weight and an ability to be formed into a sharp shape. In addition to a battery case packaging material, the biaxially-stretched PBT film of the present invention can, due to the excellent cold-formability, heat-sealing properties, and chemical resistance thereof, also be employed as pharmaceutical PTP packaging material or as material for a container for contents that include highly corrosive organic solvents such as cosmetics, photographic chemicals, and so on.

## DESCRIPTION OF REFERENCE NUMERALS

1   Unstretched original sheet
2   Low-speed nip roll
3   Stretching heater
4   Cooling shoulder air ring
5   Collapser roll
6   High-speed nip roll
7   Biaxially-stretched film

## Claims

1.   A battery case packaging material for cold forming having a base layer, a barrier layer, and a sealant layer or alternatively a base layer, a barrier layer, a barrier material reinforcing layer, and a sealant layer laminated in order from an outer side, wherein
the battery case packaging material utilizes a biaxially-stretched polybutylene terephthalate film having a 50% modulus value in all four directions (0° (MD), 45°, 90° (TD), 135°) of 100 MPa or more as the base layer and/or the barrier material reinforcing layer.

2.   The battery case packaging material for cold forming according to claim 1, wherein the base layer and/or the barrier material reinforcing layer are configured with a plurality of films including the biaxially-stretched polybutylene terephthalate film.

3.   The battery case packaging material for cold forming according to claims 1 or 2, wherein a tensile fracture strength in all four directions (0° (MD), 45°, 90° (TD), 135°) of the biaxially-stretched polybutylene terephthalate film is 200 MPa or more.

4.   The battery case packaging material for cold forming according to claims 1 or 2, wherein the biaxially-stretched polybutylene terephthalate film has a ratio between a maximum value and a minimum value of the tensile fracture strength in the four directions (0° (MD), 45°, 90° (TD), 135°) of 1.5 or less.

## Patentansprüche

1.   Batteriegehäuseverpackungsmaterial zum Kaltformen mit einer Grundschicht, einer Barriereschicht, einer Dichtungsschicht oder, in einer anderen Ausführungsform, mit einer Grundschicht, einer Barriereschicht, einer Barrierematerialverstärkungsschicht und einer Dichtungsschicht, laminiert in der Reihenfolge von einer äußeren Seite, wobei

das Batteriegehäuseverpackungsmaterial einen biaxial gestreckten Polybutylenterephthalatfilm mit einem 50% Modulwert in allen vier Richtungen (0° (MD), 45°, 90° (TD), 135°) von 100 MPa oder mehr als Grundschicht und/oder als Barrierematerialverstärkungsschicht verwendet.

2. Batteriegehäuseverpackungsmaterial zum Kaltformen nach Anspruch 1, wobei die Grundschicht und/oder die Barrierematerialverstärkungsschicht aus einer Mehrzahl von Filmen, welche den biaxial gestreckten Polybutylenterephthalatfilm beinhalten, konfiguriert sind.

3. Batteriegehäuseverpackungsmaterial zum Kaltformen nach Anspruch 1 oder 2, wobei eine Zugbruchfestigkeit in allen vier Richtungen (0° (MD), 45°, 90° (TD), 135°) des biaxial gestreckten Polybutylenterephthalatfilms 200 MPa oder mehr beträgt.

4. Batteriegehäuseverpackungsmaterial zum Kaltformen nach Anspruch 1 oder 2, wobei der biaxial gestreckte Polybutylenterephthalatfilm ein Verhältnis zwischen einem Maximumwert und einem Minimumwert der Zugbruchfestigkeit in den vier Richtungen (0° (MD), 45°, 90° (TD), 135°) von 1,5 oder weniger aufweist.


**Revendications**

1. Un matériau d'emballage pour boîtier de batterie destiné au formage à froid présentant une couche de base, une couche de barrière et une couche d'étanchéité ou, en variante, une couche de base, une couche de barrière, une couche de renforcement de matériau-barrière et une couche d'étanchéité laminées dans l'ordre depuis un coté extérieur, dans lequel
le matériau d'emballage pour boîtier de batterie utilise un film de polytéréphtalate de butylène étiré biaxialement présentant une valeur de module de 50% dans les quatre directions (0° (MD), 45°, 90° (TD), 135°) de 100 MPa ou plus en tant que couche de base et/ou en tant que couche de renforcement de matériau-barrière.

2. Le matériau d'emballage pour boîtier de batterie destiné au formage à froid selon la revendication 1, dans lequel la couche de base et/ou la couche de renforcement de matériau-barrière sont configurées avec une pluralité de films comprenant le film de polytéréphtalate de butylène étiré biaxialement.

3. Le matériau d'emballage pour boîtier de batterie destiné au formage à froid selon les revendications 1 ou 2, dans lequel une résistance à la rupture par traction dans les quatre directions (0° (MD), 45°, 90° (TD), 135°) du film de polytéréphtalate de butylène étiré biaxialement, est de 200 MPa ou plus.

4. Le matériau d'emballage pour boîtier de batterie destiné au formage à froid selon les revendications 1 ou 2, dans lequel le film de polytéréphtalate de butylène étiré biaxialement présente un rapport entre une valeur maximale et une valeur minimale de la résistance à la rupture par traction dans les quatre directions (0° (MD), 45°, 90° (TD), 135°) de 1,5 ou moins.

[Fig. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004074419 A
- JP 2000123800 A
- JP 2004327044 A
- JP 2001030407 A
- JP 2007294380 A
- JP 2008004506 A